Europäisches Patentamt

(19) European Patent Office

Office européen des brevets

(11) Publication number: 0 091 295
B1

(12) **EUROPEAN PATENT SPECIFICATION**

(45) Date of publication of patent specification: 03.09.86

(51) Int. Cl.⁴: **G 11 B 23/04**

(21) Application number: 83301857.5

(22) Date of filing: 31.03.83

(54) **Adapter for a tape recorder.**

(30) Priority: 03.04.82 JP 55858/82

(43) Date of publication of application:
**12.10.83 Bulletin 83/41**

(45) Publication of the grant of the patent:
**03.09.86 Bulletin 86/36**

(84) Designated Contracting States:
**DE FR GB NL**

(56) References cited:
**DE-A-2 242 808
DE-A-2 262 849
DE-A-2 658 586
US-A-3 632 894
US-A-3 800 321
US-A-3 964 099
US-A-4 074 876**

(73) Proprietor: **SONY CORPORATION
7-35 Kitashinagawa 6-Chome Shinagawa-ku
Tokyo 141 (JP)**

(72) Inventor: **Matsuura, Haruo c/o Patent Division
Sony Corporation 7-35 Kitashinagawa-6
Shinagawa-ku Tokyo (JP)**
Inventor: **Mutou, Masahiro c/o Patent Division
Sony Corporation 7-35 Kitashinagawa-6
Shinagawa-ku Tokyo (JP)**

(74) Representative: **Purvis, William Michael
Cameron et al
D. Young & Co. 10 Staple Inn
London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an adapter to enable a tape recorder, designed to receive a first kind of tape cassette, to receive a second, different kind of tape cassette.

Various adapters have been developed for this purpose.

For example, U.S. Patent No. 3,800,321 discloses a construction in which during the normal mode rotation of a pinch roller of a tape recorder is transmitted to a take-up reel support of an adapter and a supply reel support of the tape recorder is directly connected to a supply reel support of the adapter. During rewinding the transmission to the take-up reel of the adapter is stopped and the supply reel is rotated.

Adapters of the kind in which a tape cassette inserted therein can be fed fast are described in U.S. Patents No. 3,632,894 and No. 3,964,099, for example. However, the adapter disclosed in U.S. Patent No. 3,632,894 is of a large size, expensive and uses a lot of power, due to a motor and a plunger disposed in the adapter itself. In a structure described in U.S. Patent No. 3,964,099, a pair of rotating members constantly coupled to a take-up reel support and a supply reel support of a tape recorder transmit rotation to a take-up reel support and a supply reel support of the adapter, respectively. Therefore, a tape of a tape cassette received in the adapter can be fed fast and rewound. However, in the normal drive mode (FWD) of the tape cassette, the supply reel supports of the adapter and the tape recorder are still in a state of coupling, so that the tape is exposed to excessive backward tension.

According to the invention there is provided an adapter to be engaged in a tape recorder designed to receive a first kind of tape cassete and to receive a second different kind of tape cassette, the adapter comprising a pair of rotatable members to be engaged one with a supply reel shaft and the other with a take-up reel shaft of the tape recorder and to be rotatably driven together therewith and a supply reel support and take-up reel support for driving tape spools of said second kind of tape cassette received in the adapter and further comprising:

an interlocking mechanism to make said pair of rotatable members rotate in the same direction as one another by transmitting the rotational driving power of either one of said pair of rotatable members that is driven by either said supply reel shaft or said take-up reel shaft, to the other of said pair of rotatable members and

a transmission mechanism moved to an operative position to transmit rotational driving power of the interlocking mechanism selectively to either said supply reel support or said take-up reel support during the fast motion modes (FF, REW) of the tape recorder, and held in such a position as makes it unable to transmit the rotational driving power from the interlocking mechanism to either of the reel supports during a normal motion mode (FWD) of the tape recorder, in which mode the take-up reel support of the adapter is driven by a separate power transmission.

A tape cassette inserted in the adapter can be used in FF mode and REW mode. In addition, the tape is not exposed to excessive backward tension in the FWD mode. Further, since the transmission mechanism is so constructed that it is automatically displaced in response to the direction of rotation of the interlocking mechanism in the state of FF and REW modes, the adapter structure as a whole is significantly simplified.

The invention is diagrammatically illustrated by way of example in the accompanying drawings, in which:

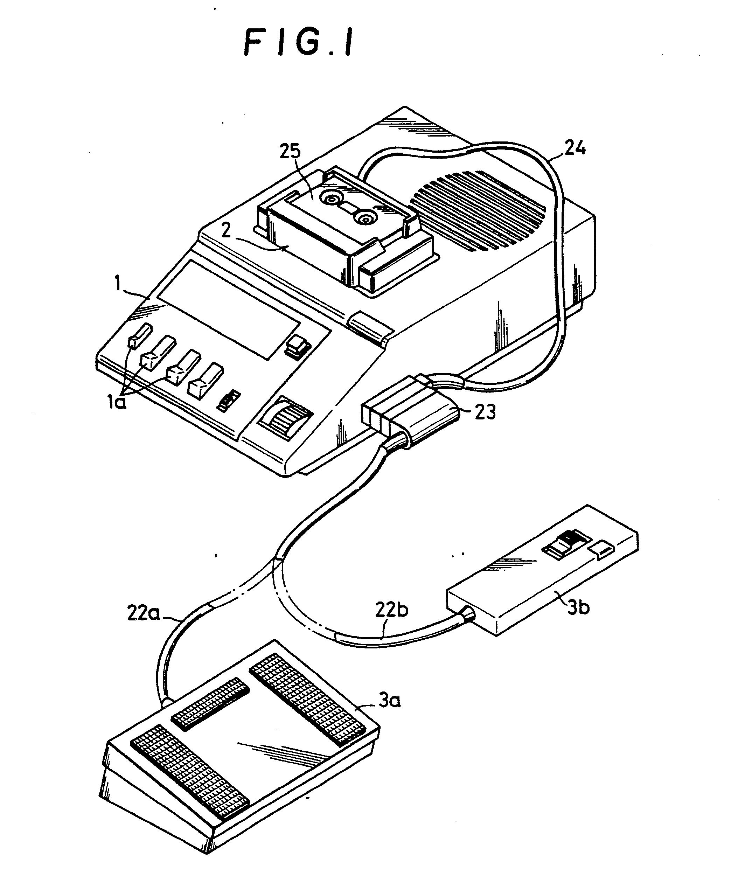

Figure 1 is a perspective view of a microcassette tape recorder with an adapter according to the invention which can receive a mini-cassette attached thereto;

Figure 2 is a plan view of the adapter of Figure 1;

Figure 3 is a plan view of a cassette or adapter receiving a portion of the microcassette tape recorder shown in Figure 1;

Figure 4A is a schematic view of an adapter according to the invention showing one state of a reproduction power transmission system, that is a state before insertion of a minicassette;.

Figure 4B is a schematic view similar to Figure 4A showing another state of the reproduction power transmission system, that is, a state after insertion of a minicassette;

Figure 4C is a schematic view similar to Figure 4A and 4B showing yet another state of the reproduction power transmission system, that is, a state during a reproducing operation;

Figure 5 is a perspective view illustrating rotatable members for connection reel shafts of the microcassette tape recorder and an interlocking mechanism coupling the rotating members;

Figure 6A is a schematic view showing one state of a rewind/fast feed power transmission system, that is, a state before insertion of a minicassette; and

Figure 6B is a schematic view similar to Figure 6A showing another state of the rewind/fast feed power transmission system, that is, a state after insertion of a minicassette.

An adapter 2 which can receive a minicassette can be removably engaged in a cassette receiving position of a microcassette tape recorder 1. Using the adapter 2, the tape recorder 1 can accept a minicassette 25 for operation in reproducing, recording fast forwarding, rewinding and possibly other modes by selectively operating control buttons 1a. Alternatively, a foot operated remote control device 3a or a hand-held remote control device 3b can be connected to the tape recorder 1 by connecting cords 22a and 22b a connector 23, so that the tape recorder 1 can be remotely controlled. The adapter 2 is also connected to the tape recorder 1 through the connecting cord 24 and the connector 23, but only to receive signals from a head 6 as described later. Changeover of the modes of use such as fast forwarding, forwarding, rewinding and stop modes, which are denoted respectively by FF, FWD, REW and STOP are effected by swithching over the tape recorder 1.

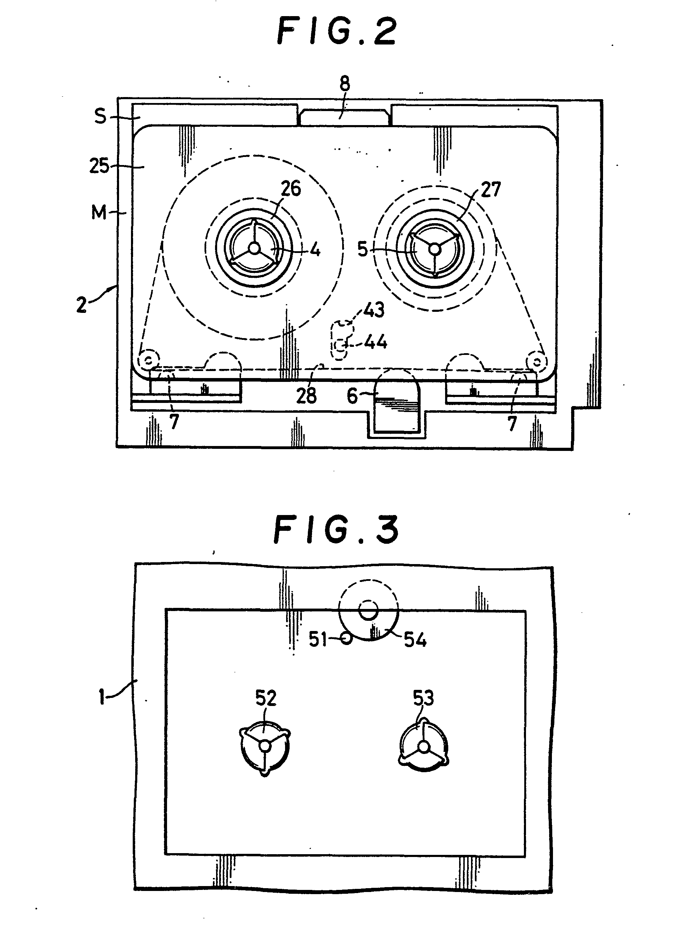

As shown in Figure 2, in order to drive a pair of reels 26 and 27 within the minicassette 25 to make a tape 28 of the minicassette run, the adapter 2 is provided with a supply reel support 4 and a take-up reel support 5. The reel supports 4 and 5 projecting from a subchassis S and a main chassis M which form a base of the adapter 2.

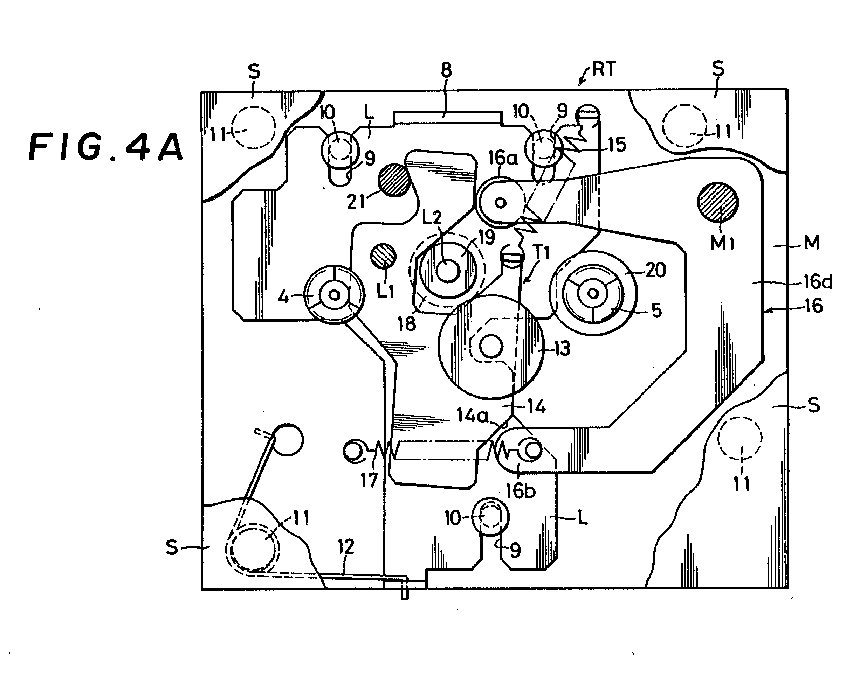

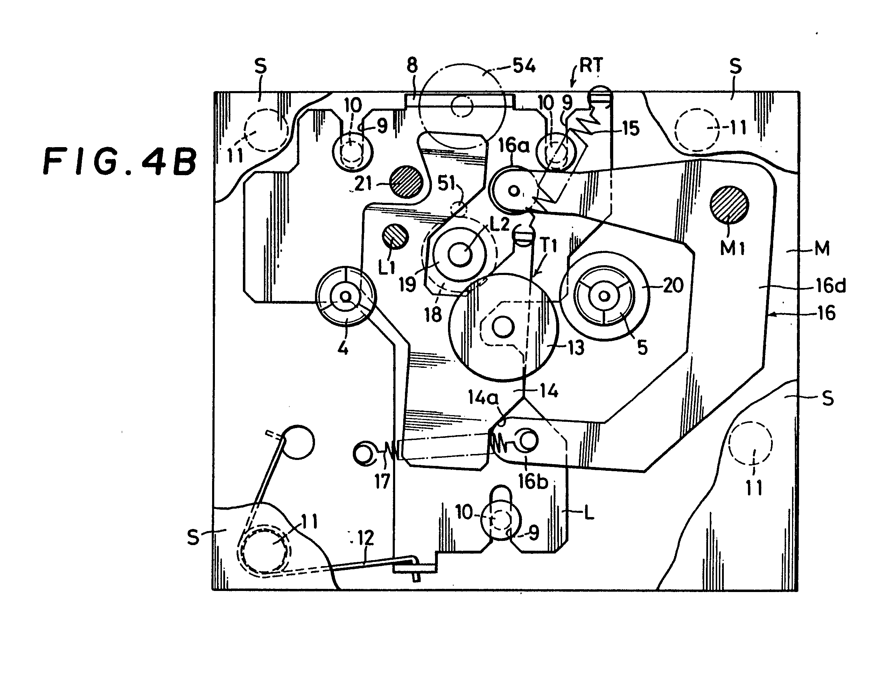

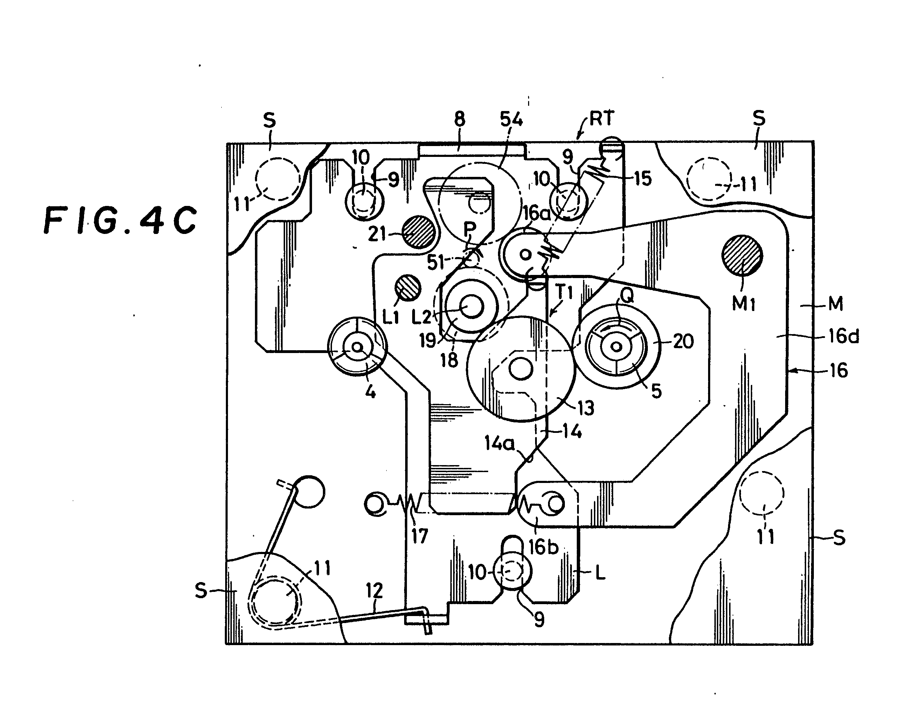

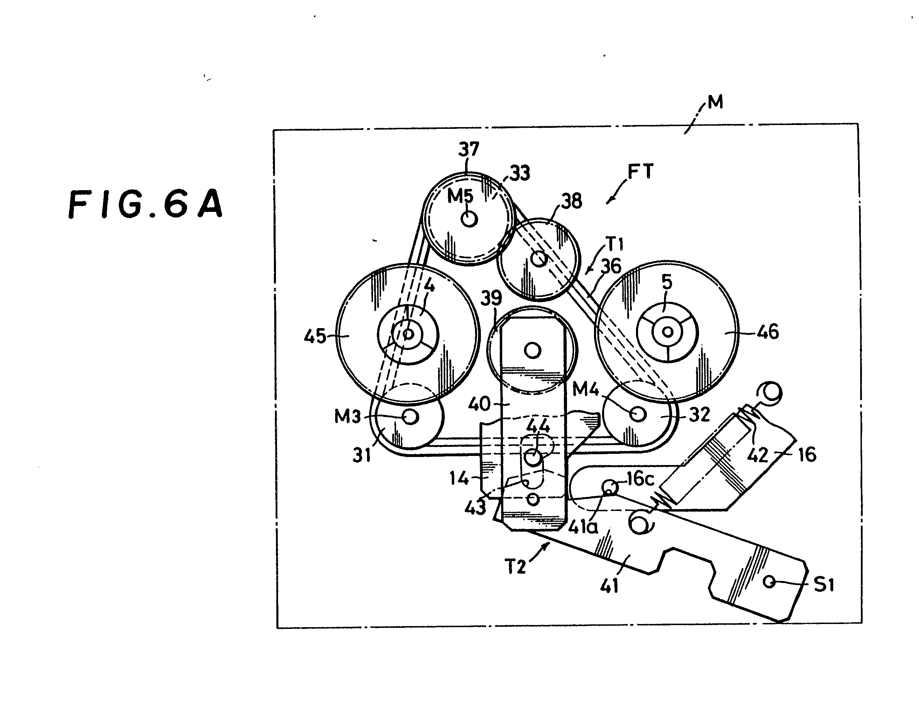

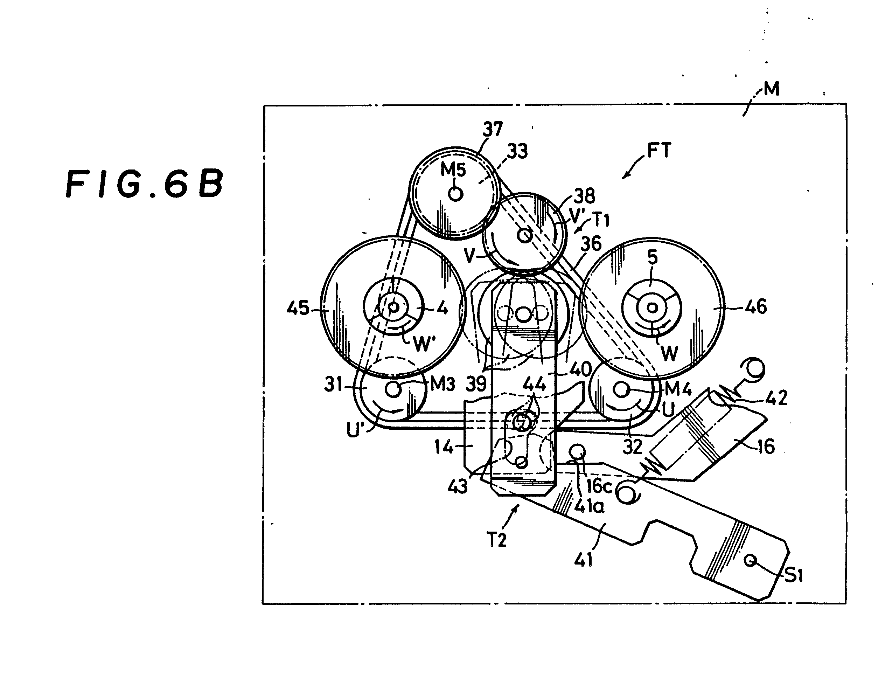

At one side of rectangular subchassis S, there are secured the reproducing and recording head 6 for the minicassette 25 and also cassette positioning members 7. At the other side of the subchassis S is a cassette detecting member 8 to which an urging force acting upwardly as seen in Figure 2 is exerted, when the minicassette 25 is inserted. When reproducing or recording operation of the minicassette 25 received in the adapter 2 is required, power is obtained from a capstan 51 shown in Figure 3 of the tape recorder 1 to drive the take-up reel support 5 through a reproduction power transmission system RT (Figure 4). In the FF mode or REW mode of the minicassette 25, power is obtained from a supply reel shaft 52 or a take-up reel shaft 53 of the tape recorder 1 shown in Figure 3, to drive the take-up reel support 5 or the supply reel support 4 though a rewind/fast feed power transmission system FT (Figures 6A and 6B). The reproduction power transmission system RT and the rewind/fast feed power transmission system FT operate independently of each other.

The reproduction power transmission system RT will be described in detail with reference to Figures 4A to 4C. The cassette detecting member 8 projects from one end (the upper end as seen in Figure 4A) of a slider L mounted on the main chassis M of the adapter 2. Notches 9 provided in the slider L engage with guide members 10 projecting from the main chassis M, so that the slider L can slide only in a direction perpendicular to a line connecting the reel supports 4 and 5 (i.e., in the vertical direction as seen in Figure 4A). The cassette detecting member 8 is constantly urged toward the reel supports 4 and 5 (in the downward direction as seen in Figure 4A) by a torsion spring 12 wrapped around one of a plurality of supports rods 11 which secure the subchassis S and the main chassis M at a fixed parallel spacing from one another.

A rubber idler roller 13 is pivotally supported on the slider L. A pivot lever 14 mounting the idler roller 13 is attached at one end thereof to the slider L by a spring 165 in such a manner that it is urged counterclockwise as seen in Figure 4A about a pivot shaft L1. Thus, a first transmission mechanism T1 comprising the idler roller 13, the pivot lever 14 and the spring 15 is provided. A U-shaped sensing lever 16d is pivotally mounted on the main chassis M by a pivot shaft M1. One end of the sensing lever 16d mounts a pinch roller seat 16a. A pinch roller 54 of the tape recorder 1 illustrated in Figure 3 can move toward and away from the pinch roller seat 16a. The other end of the sensing lever 16d is connected to the main chassis M through a spring 17 in such a manner that the sensing lever 16d is always urged clockwise as viewed in Figure 4A. As the sensing lever 16d swings clockwise from its position shown in Figure 4A, an engagement portion 16b at the other end of the sensing lever 16d is brought into engagement with a corresponding engagement portion 14a provided on the pivot lever 14 of the idler roller 13. Thus, the sensing lever 16d, the spring 17, the pinch roller seat 16a and the engagement portion 16b form a switch-over mechanism 16. A stop 21 projecting from a main chassis M abuts the pivot lever 14 to limit pivotal movement thereof.

A pivot shaft L2 of the constant-speed rotating member 18 formed by a rubber roller is mounted on the slider L in such a manner that the pivot shaft L2 can be moved reliably to the slider L only in the direction to which the slider L is slidable, although not shown in detail. The pivot shaft L2 is always elastically urged toward the cassette detecting member 8 of the slider L to cause the rotating members 18 elastically to abut the capstan 51. Further, a roller 19 formed coaxially and integrally with the rotating member 18 can be moved toward and away from the idler roller 13.

The function of the reproduction power transmission system RT constructed as described above will be described below. When the minicassette 25 is fitted into the adapter 2 with the front edge thereof in contact with the cassette positioning members 7, the rear edge of the minicassette 25 urges the cassette detecting member 8 rearwardly (upwardly as seen in Figure 4B). Consequently, the slider L moves rearwardly against the force of the spring 12. Then, the sensing lever 16d whose rotation has been restricted by the slider L, rotates clockwise due to the tension of a spring 17, and the engagement 16b and 14a engage with each other as seen in Figure 4B. Now, the idler roller 13 is close to a disc base 20 of the take-up reel support 5. The rotating member 18 is moved with the slider L and contacts the capstan 51. That is, when the minicassette 25 is inserted in the adapter 2, the idler roller 13 is not in contact with but is close to both the roller 19 and the disc base 20.

However, under these circumstances, when an appropriate one of the control buttons 1a or the remote control device 3a or 3b is actuated to select FWD mode of the tape recorder 1, the capstan 51 of the tape recorder 1 pivots in a direction as indicated by arrow P in Figure 4c, and the pinch roller 54 moving toward the capstan 51 is brought into contact with the pinch roller seat 16a to move the pinch roller seat 16a and cause the sensing lever 16d to pivot counterclockwise to the position seen in Figure 4C. In this position the engagement portions 14a and 16b are spaced apart. The pivot lever 14 pivots counterclockwise as seen in Figure 4C under the action of the spring 15, and the idler roller 13 comes into contact with both the roller 19 and the disc base 20 of the take-up reel support 5. Therefore, the take-up reel support 5 rotates in a direction indicated by arrow Q in Figure 4C, so that sound recorded on the tape 28 is reproduced or sound is recorded on the tape 28.

When an appropriate one of the buttons 1a or the remote control device 3a or 3b is actuated to switch over from FWD mode to STOP mode, the pinch roller 54 moves away from the pinch roller seat 16a. Thereby, the sensing lever 16d pivots clockwise as seen in Figure 4B, so that the engagement portions 16b and 14a are re-engaged with each other, and the pivot lever 14 also pivots clockwise to return to the position shown in Figure 4B. Thus, the reproducing (recording) operation of the minicassette 25 is immediately stopped.

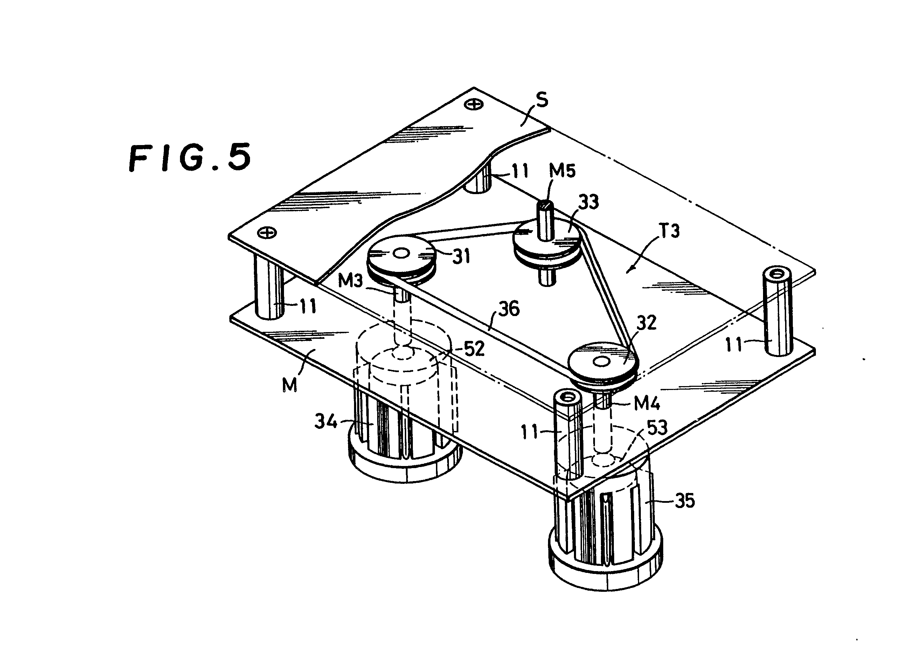

The rewind/fast forward power transmission system FT will be described below with reference to Figures 5, 6A and 6B. As shown in Figure 5, rotatable members 31 and 32 formed as pulleys rotatably supported on the main chassis M are mounted on shafts M3 and M4, respectively. At the ends of the shafts M3 and M4, there are connecting portions 34 and 35 which can be detachably engaged respectively on the reel shafts 52 and 53 of the tape recorder 1. A belt 36 extends around the pair of rotatable members 31 and 32 and around another rotatable member 33 which is a pulley mounted on a shaft M5 projecting from the main chassis M. The rotatable members 31, 32, 33 and the belt 36 constitute an interlocking mechanism T3. The rotatable members 31 and 32 always rotate in the same direction as one another. A gear 37 provided coaxially and integrally with the rotatable members 33 as shown in Figure 6A is disposed so as to be engageable, by way of an intermediate gear 38 pivotally supported on the subchassis S, with a gear 39 pivotally supported at one end of a link 40. A lever 41 is pivotally mounted at one' of its ends on the subchassis S by a pivot shaft S1 and has the other of its ends coupled to link 40 by a pin. The middle portion of the lever 41 is connected to the subchassis S through a spring 42 so that the lever 41 is constantly urged to pivot clockwise about the pin S1 viewed in Figure 6A. The lever 41 is provided with an engagement portion 41a near the aforementioned other end thereof, which engagement portion 41a can engage with an engagement portion 16c protruding from near the engagement portion 16b of the sensing lever 16d. The gear 39, the link 40 and the lever 41 form a second transmission mechanism T2.

In operation of the rewind/fast forward power transmission system FT, before the minicassette 25 is received in the adapter 2, the sensing lever 16d is in the position as shown in Figure 4A. The engagement portions 16c and 41a are engaged with each other as shown in Figure 6A and the lever 41 is thereby prevented from pivoting even under the tension of the spring 42. The gear 39 is thus spaced away from the gear 38. In this condition, a pin 44 projecting from the link 40 and fitted in a substantially L-shaped slot 43 in the subchassis S is positioned in a portion of the slot 43 which extends parallel to the longitudinal direction of the link 40, so that swinging movement of the link 40 is restricted.

When the minicassette 25 is inserted in the adapter 2, the sensing lever 16d pivots clockwise from the position shown in Figure 4A to the position shown in Figure 4B. As a consequence, the engagement portions 16c and 41a are spaced apart as illustrated in Figure 6B and the lever 41 pivots clockwise as viewed in Figure 6B under the action of the spring 42, so that the gear 39 engages with the gear 38. In this condition, the pin 44 is shifted to a portion of the slot 43 which extends transverse to the longitudinal extent of the link 40 and the link 40 can swing in the transverse direction to the position of Figure 6B.

In the condition shown in Figure 6B , an appropriate one of the control buttons 1a or the remote control device 3a or 3b is operated to select FF mode, the rotatable member 32 connected to the take-up reel shaft 53 of the tape recorder 1 rotates in the direction indicated by arrow U in Figure 6B and the rotatable members 31 and 33 also rotate in the same direction. Consequently, the gear 38 rotates in a direction as indicated by arrow V, and the gear 39 driven by the gear 38 is displaced rightward as viewed in Figure 6B. The gear 39 finally meshes with a gear 46 which is integral with the take-up reel support 5. Thus, the take-up reel support 5 is driven in a direction as indicated by arrow W, whereby the tape 28 within the minicassette 25 is fed fast.

However, when an appropriate one of the control buttons 1a or the remote control device 3a or 3b is actuated to select the REW mode from the state shown in Figure 6B, the rotatable member 31 connected to the supply reel shaft 52 of the tape recorder 1 rotates in a direction as indicated by arrow U' in Figure 6B, and the other rotatable members 32 and 33 also rotate in the same direction. As a result, the gear 38 rotates in a direction as indicated by arrow V', and the gear 39 driven by this gear 38 is urged and displaced leftward as seen in Figure 6B. The gear 39 then meshes with a gear 45 which is integral with the supply reel support 4. Consequently, the supply reel supply 4 is driven in a direction as indicated by arrow W', so that the tape 28 within the minicassette 25 is rewound. When the appropriate on of the control buttons 1a or the remote control device 3a or 3b is actuated to switch over the FF mode or REW mode to STOP mode, the reel shaft 52 or 53 of the tape recorder 1 stops immediately. At the same time, the first interlocking mechanism T1 also stops operation, so that the fast forward operation or the rewind operation of the minicassette is also immediately terminated. Then, if the FWD mode is selected, the sensing lever 16d is displaced from the position shown in Figure 4B to the position as shown in Figure 4C. The engagement portion 16c again abuts against the engagement portion 41a to separate the gear 39 from the gear 38. Therefore, the take-up reel support 5 can be driven for reproduction without any adverse influence. Rather, both reel supports 4 and 5 rotating at the same angular speed for the interlocking mechanism T1 provide an effect that the tape 28 within the minicassette 25 is not subject to excessive backward tension during the reproducing operation.

It should be noted that the invention is not limited to the above embodiment wherein the invention is applied to an adapter for a minicassette used with a microcassette tape recorder, but can be applied for example to an adapter for a minicassette used with a capstan-driven compact cassette tape recorder.

## Claims

1. An adapter to be engaged in a tape recorder designed to receive a first kind of tape cassette and to receive a second different kind of tape cassette, the adapter comprising a pair of rotatable members (34, 35) to be engaged one (34) with a supply reel shaft (52) and the other (35) with a take-up reel shaft (53) of the tape recorder and to be rotatably driven together therewith and a supply reel support (4) and a take-up reel support (5) for driving tape spools of said second kind of tape cassette received in the adapter characterised by: an interlocking mechanism (T3 in Figure 5) to make said pair of rotatable members (34, 35) rotate in the same direction by transmitting the rotational driving power of either one of said pair of rotatable members (34, 35) that is driven by either said supply reel shaft (52) or said take-up reel shaft (53), to the other of said pair of rotatable members (34, 35) and a transmission mechanism (FT in Figure 6A—B) moved to an operative position to transmit rotational driving power of the interlocking mechanism (T3) selectively to either said supply reel support (4) or said take-up reel support (5) during the fast motion modes (FF, REW) of the tape recorder (1), and held in such a position as makes it unable to transmit the rotational driving power from the interlocking mechanism (T3) to either of the reel supports (4, 5) during a normal motion mode (FWD) of the tape recorder (1), in which mode the take-up reel support (5) of the adapter (2) is driven by a separate power transmission (RT in Figure 4A—C).

2. An adapter according to claim 1, characterised in that the displacement due to a switchover to the normal motion mode of a pinch roller (54) movable provided in the tape recorder (1), is detected by a link mechanism (T2), so that the transmission mechanism (FT) is displaced away from the interlocking mechanism (T3) to achieve said state in which transmission of said rotational driving power is impossible.

3. An adapter according to claim 1, characterised in that the transmission mechanism (FT) moved to said operative position is automatically displaced in response to the direction of rotation of the interlocking mechanism (T3) which varies in dependence upon the situation whether the fast forward mode or the rewind mode is selected in the tape recorder (1), thereby selectively transmitting the rotational driving power to either of said reel supports (4, 5).

4. An adapter according to claim 1, characterised in that the interlocking mechanism (T3) comprises one or a plurality of endless belts (36) coupling said pair of rotatable members (34, 35) and another rotatable member (33) rotated by said belt (36).

5. An adapter according to claim 3 or claim 4, characterised in that the transmission mechanism (FT) comprises a first rotatable member (38) driven via said pair of rotatable members (34, 35) and a second rotatable member (39) which is arranged to be freely in contact with or apart from said first rotatable member (38), revolving round said first rotatable member (38) in response to a rotary direction of said first rotatable member (38) to engage either with a third rotatable member (45) of the supply reel support (4) or with a fourth rotatable member (46) of the take-up reel support (5).

## Patentansprüche

1. In ein zur Aufnahme einer ersten Art von Bandcasetten bestimmtes Bandgerät einsetzbarer Adapter (2) zur Aufnahme einer zweiten Art von Bandcasetten

mit einem Paar drehbarer Glieder (34, 35), von denen das eine (34) mit der Welle (52) einer Vorratsbandspule und das andere (54) mit der Welle (53) einer Aufwickelbandspule des Bandgeräts (1) in Eingriff bringbar und zusammen mit der jeweiligen Welle (52 oder 53) mit einer Drehbewegung beaufschlagbar ist,

sowie mit einem Vorratsbandspulenträger (4) und einem Aufwickelbandspulenträger (5) für den Antrieb der Bandspullen einer in dem Adapter (2) aufgenommenen Bandcasette der zweiten Art, gekennzeichnet durch

einen Mitnehmermechanismus (T3 in Fig. 5) , der dazu dient, die beiden drehbaren Glieder (34, 35) in gleicher Richtung rotieren zu lassen, indem Drehantriebsleistung von demjenigen der beiden drehbaren Glieder (34, 35), das durch die ihm zugeordnete Welle (52 bzw. 53) der Vorratsbandspul bzw. der Aufwickelbandspule angetrieben wird, auf das jeweils andere der beiden drehbaren Glieder (34, 35) übertragen wird,

und einen Transmissionsmechanismus (FT in Fig. 6A und 6B), der nach seiner Bewegung in eine Betriebsstellung während der Schnellaufarten (schneller Vorlauf, schneller Rücklauf) des bandgeräts (1) Drehantriebsleistung von dem Mitnehmermechanismus (T3) wahlweise entweder auf den Vorratsbandspulenträger (4) oder den Aufwikkelbandspulenträger (5) überträgt, und während des Normallaufmodus (normaler Vorwärtslauf) des Bandgeräts (1) in einer solchen Position gehalten wird, daß eine Übertragung von Drehantriebsleistung von dem Mitnehmermechanismus (T3) auf einen der Bandspulenträger (4 oder 5) nicht möglich ist und der Aufwikkelbandspulenträger (5) des Adapters (2) in diesem Modus von einer separaten Leistungsübertragung (RT in Fig. 4A bis 4C) angetrieben wird.

2. Adapter nach Anspruch 1, dadurch gekennzeichnet, daß die eine Umschaltung einer in dem Bandgerät (1) beweglich angeordneten Andruckrolle (54) in den Normallaufmodus begleitende Verschiebungsbewegung von einem Hebelmechanismus (T2) abgetastet wird, durch den der Transmissionsmechanismus (FT) von dem Mitnehmermechanismus (T3) wegbewegt und dadurch der Zustand hergestellt wird, in dem eine Übertragung von Drehantriebsleistung nicht möglich ist.

3. Adapter nach Anspruch 1, dadurch gekennzeichnet, daß der in die genannte Betriebsstellung bewegte Transmissionmechanismus (FT) je nach Drehrichtung des Mitnehmermechanismus (T3), die sich in Abhängigkeit davon ändert, ob das Bandgerät (1) auf die Betriebsart schneller Vorlauf oder die Betriebsart schneller Rücklauf eingestellt ist, automatisch verschoben wird, wodurch die Drehantriebsleistung wahlweise entweder auf den einen oder den anderen der beiden Banspulenträger (4, 5) übertragen wird.

4. Adapter nach Anspruch 1, dadurch gekennzeichnet, daß der Mitnehmermechanismus (T3) einen oder mehrere endlose Riemen (36) umfaßt, die das Paar drehbarer Glieder (34, 35) sowie ein weiteres von dem Riemen (36) angetriebenes drehbares Glied (33) miteinander kuppeln.

5. Adapter nach Anspruch 3 oder 4, dadurch gekennzeichnet, daß der Transmissionsmechanismus (FT) ein erstes rotierbares Glied (38) umfaßt, das durch das genannte Paar drehbarer Glieder (34, 35) angetrieben ist, sowie ein zweites rotierbares Glied (39), das derart angeordnet ist, daß es mit dem ersten rotierbaren Glied (38) in freier Berührung steht oder aber von diesen beabstandet ist und sich je nach Drehrichtung des ersten rotierbaren Glieds (38) um dieses herum abrollt, so daß es entweder mit einem dritten rotierbaren Glied (45) des Vorratsbandspulenträgers (4) oder mit einem vierten rotierbaren Glied (46) des Aufwickelbandspulenträgers (5) in Eingriff kommt.

**Revendications**

1. Adaptateur destiné à être mis en place dans un magnétophone conçu pour recevoir un premier type de cassette de bande et pour recevoir un deuxième type, différent, de cassette de bande, l'adaptateur comprenant un paire d'éléments tournants (34, 35) devant venir en prise, pour l'un (34), avec un arbre de bobine de délivrance (52) et, pour l'autre (35), avec un arbre de bobine d'enroulement (53) du magnétophone et devant être entraînés en rotation ensemble avec ceux-ci, ainsi qu'un support de bobine de dèlivrance (4) et un support de bobine d'enroulement (5) servant à entraîner des bobines de bande du deuxième type de cassette de bande reçues dans l'adaptateur, caractérisé par:
un mécanisme d'interverrouillage (T3 sur la figure 5) servant à faire tourner ladite paire d'éléments tournants (34, 35) dans le même sens par transmission de l'énergie d'entraînement en rotation de celui des éléments de ladite paire d'éléments tournants (34, 35) qui est entraîné par ledit arbre de bobine de délivrance (52) ou ledit arbre de bobine d'enroulement (53) à l'autre élément de ladite paire d'éléments tournants (34, 35), et
un mécanisme de transmission (FT sur les figures 6A—6B) qui est amené dans une position active pour transmettre sélectivement l'énergie d'entraînement en rotation du mécanisme d'interverrouillage (T3) à l'un ou l'autre desdits support de bobine de déliverance (4) et support de bobine d'enroulement (5) pendant lesdits modes de déplacement rapide (FF, REW) du magnétophone (1) et qui est maintenu dans une position telle qu'il est rendu inapte à transmettre l'énergie l'entraînement en rotation du mécanisme d'interverrouillage (T3) á l'un au l'autre des supports de bobines (4, 5) pendant un mode de déplacement normal (FWD) du magnétophone (1), dans lequel mode le support de bobine d'enroulement (5) de l'adapteur (2) est entraîné par une transmission d'énergie distincte (RT sur les figures 4—A—4—C).

2. Adaptateur selon la revendication 1, caractérisé en ce que le déplacement dû à une commutation au mode de déplacement normal d'une galet presseur (54) qui est prévu mobile dans le magnétophone (1) est détecté par un mécanisme de tringlerie (T2), de sorte que le mécanisme de transmission (FT) est alors écarté du mécanisme d'interverrouillage (T3) pour réaliser ledit état dans lequel la transmission de l'énergie d'entraînement en rotation est impossible.

3. Adaptateur selon la revendication 1, caractérisé en ce que le mécanisme de transmission (FT) déplacé à ladite position active est déplacé automatiquement en réponse au fait que le sens de rotation du mécanisme d'interverrouillage (T3) varie selon que le mode d'avance rapide ou le mode de rebobinage a été sélectionné dans le magnétophone (1), afin de transmettre sélectivement l'énergie d'entraînement en rotation à l'un ou l'autre desdits supports de bobines (4, 5).

4. Adaptateur selon la revendication 1, caractérisé en ce que le mécanisme d'interverroullage (T3) comprend une ou plusieurs courroies sans fin (36) couplant ladite paire d'éléments tournants (34, 35) et un autre élément tournant (33) entraîné par ladite courroie (36).

5. Adaptateur selon la revendication 3 ou 4, caractérisé en ce que le mécanisme de transmission (FT) comprend un premier élément tournant (38) entraîné par l'intermédiaire de ladite paire d'éléments tournants (24, 35) et un deuxième élément tournant (39) qui est conçu de façon à être librement en contact avec ledit premier élément tournant (38) ou écarté de ce dernier, et tournant sur ledit premier élément tournant (38) en fonction du sens de rotation dudit premier élément tournant (38) afin de venir en prise avec un troisième élément tournant (45) du support de bobine de délivrance (4) ou avec un quatrième élément tournant (46) du support de bobine d'enroulement (5).

# FIG.1

# FIG.2

# FIG.3

FIG.4A

0 091 295

FIG.4B

FIG.4C

0 091 295

FIG.5

# FIG.6A

0 091 295

FIG.6B